# EUROPEAN PATENT SPECIFICATION

(11) **EP 4 415 558 B1**
(45) Date of publication and mention of the grant of the patent: **07.10.2026**
(21) Application number: 22797393.0
(22) Date of filing: 11.10.2022
(51) Int. Cl.: A23L 11/30, A23J 1/14, A23L 11/10, A23L 11/00

(54) **PROCESS FOR TREATING PLANT AND/OR RAW FOOD MATERIAL**
VERRFAHREN UND ANLAGE ZUR BEHANDLUNG VON PFLANZLICHEN UND/ODER ROHEN NAHRUNGSMITTELN UND DEREN PRODUKT
PROCÉDÉ ET INSTALLATION DE TRAITEMENT DE MATIÈRES VÉGÉTALES ET/OU DE MATIÈRES PREMIÈRES ALIMENTAIRES ET LE PRODUIT AINSI OBTENU

(30) Priority: 11.10.2021 EP 21202025
(43) Date of publication of application: 21.08.2024
(73) Proprietor: Nub Technologies Ltd, East Grinstead West Sussex RH19 3AF (GB)
(72) Inventor: MARAIS, Pierre Guillaume, East Grinstead West Sussex RH19 3AF (GB)
(74) Representative: Icosa
(86) International application number: PCT/EP2022/078305
(87) International publication number: WO 2023/062035

(56) References cited:
- WO-A1-2019/006286
- WO-A1-2020/123915
- WO-A1-2021/229005
- CA-A- 761 381
- CA-A1- 3 113 146
- US-A- 4 476 148
- US-B2- 7 258 889

## Description

### FIELD OF INVENTION

The present invention relates to a process for the treatment of a legume raw material.

### BACKGROUND OF INVENTION

Proteins represent a fundamental part of food diets. Due to the development of novel types of diets, such as vegetarianism, veganism and/or flexitarianism, a surge can be observed for new products containing plant proteins, especially legumes like peas. The number of new product launches with "plant-based" claims in the United States reached 320 in 2016, up from 94 in 2012, according to Innova Market Insights, Duiven, The Netherlands. Mintel in its "Food and drink trends 2017" report said the food and beverage industry this year will welcome more products that emphasize plants as ingredients, which will serve as a way to align with consumers' health and wellness concerns.

The success of a plant-protein based product will depend on several criteria including taste, palatability, and the non-denaturated protein content.

Leguminous materials are attractive as alternative protein sources to replace soy products in foods and beverages. However, leguminous materials are often undesirable for use in food products because of their undesirable flavors. For instance, pea flour obtained from dry milling of peas contains pea flavors and a bitter taste. Consequently, when pea flour is used in food products, the flavor and bitter taste of raw peas is transferred to these products.

In order to optimize palatability and taste of plant-protein based products, different treatment and/or extraction processes have been developed in order to avoid the plant proteins' off-flavors in the product. Two major examples of suitable processes for extracting protein isolates and concentrates are the "wet methods" and the "dry methods" detailed below for the case of pea proteins.

The wet methods for the extraction of pea proteins are particularly suitable for obtaining protein isolates comprising from about 70% to 80% proteins. Said wet methods imply an alkaline extraction and an acid precipitation or ultrafiltration. The final step of said methods comprises drying the protein isolate through an air dryer, with air temperatures ranging up to 150°C. The exposure to acidic and alkaline media, and the exposure to heat in these wet methods will have an unfavorable impact on the quality of the proteins extracted from the peas. The proteins' functionalities, such as emulsifying properties, water solubility, dispersive properties, gelling properties, foaming properties, and their ability to bind water and/or fat may be affected by such treatment steps. As a result of the damage caused to the protein quality by these methods, it may then be necessary to modify the obtained protein compositions to impart to them the desired properties, for example using complex technologies such as enzymatic hydrolysis.

The use of the dry route, i.e., the air classification methods, makes it possible to obtain pea protein concentrates but this method typically contains far higher levels of anti-nutritional factors, which render the final product unpalatable for most consumers and hence, its applications to food are more limited.

Pre-milling thermal treatments may reduce off-flavors in legumes, including yellow peas, navy beans and faba beans, processed as ingredients for commercial food products, according to the Canadian International Grains Institute (Cigi), Winnipeg, Man.

International patent application WO 2019/006286 discloses a method of processing a raw pea composition to reduce non-volatile flavor components, comprising: steam cooking a raw pea slurry to form a cooked pea slurry; and drying the cooked pea slurry to form a processed pea composition; wherein an amount of non-volatile flavor components associated with proteins having a molecular weight of about 25 kDa or greater in the processed composition is less than an amount of non-volatile flavor components in the raw materials. The cooking according to this process is typically a jet cooking with steam of at a pressure of at least 5 p.s.i (~344 mbar) and a temperature of at least 150°F (~65,5°C). Such thermal and pressure conditions do not allow maintaining all properties of proteins extracted from the raw pea composition.

Published patent applications WO 2020/123915 A1, CA 3 113 146 A1, US 4 476 148A and CA 761 381 A disclose methods for reducing undesirable off-flavor in plant materials. However, they fail to disclose a process that allows maintaining all properties of proteins extracted from legume raw material.

In addition, existing processes for reducing undesirable off-flavor components from plant-based raw material do generally not allow recovering the extracted off-flavor components nor further treating and/or using them.

Finally, traditional protein isolate manufacturing processes generate enormous volumes of effluent and waste, and present a high energy consumption.

Consequently, there is still a need in developing new treatment processes for plant-based materials, such as plant-based raw food materials, allowing reduction and/or elimination of undesired off-flavor compounds while maintaining the whole functionality of proteins comprised therein. Advantageously, such processes should further allow recovering the extracted off-flavor components and further treating and/or using them. Further advantageously, such processes should also be frugal in terms of solvents, effluents and/or energy consumption, in order to allow a more economical and environment-friendly implementation of the treatment process.

### SUMMARY

This invention thus relates to a process for deodorizing a legume raw material comprising starch, proteins and off-flavor compounds without denaturating the proteins, said method comprising the steps of:
i. contacting the legume raw material with an aqueous solution at a temperature ranging from about 5 °C to about 40 °C, leading to a hydrated legume material;
ii. blanching the hydrated plant and/or raw food material by heating the hydrated legume material at a temperature comprised between 60°C and 121°C, for a period ranging from about 1 to about 30 seconds, thereby blanching the hydrated legume material;
iii. rapid cooling the blanched legume material by applying high vacuum while agitating, said high vacuum presenting an absolute atmospheric pressure of less or equal to about 123 mbar, less or equal to about 100 mbar, less or equal to about 50 mbar, preferably less or equal to about 35 mbar, more preferably less or equal to 15 mbar, even more preferably less or equal to about 5 mbar, thereby protecting the legume from protein denaturation;
iv. steam-stripping under the high vacuum (as described in the cooling step) by blending the cooled legume material by injecting water steam, said water steam presenting a temperature ranging from about 30°C to about 50°C, so as to remove the off-flavor compounds,
v. drying the legume material by setting aside the injected water steam containing the off-flavor compounds, leading to a dried and deodorized legume material.

The process may further comprise at least one step vi), wherein the dried and deodorized legume material of step v) is hydrated and subjected to a new cycle of steam-stripping and drying according to steps iv) and v).

In one embodiment, the legume raw material is selected from peas, typically yellow split peas.

In one embodiment, step i) is carried-out by spraying the legume raw material with an aqueous solution.

In one embodiment, the drying step v) is carried-out by condensation, typically with a chiller heat exchanger.

The process may further comprise a step of milling the deodorized and dried legume raw material into a deodorized legume raw material flour comprising starch and proteins. The deodorized legume raw material flour may then be fractionated into a deodorized protein-rich fraction and a deodorized starch-rich fraction, typically by air-classification milling. The deodorized protein-rich fraction may present an average particle size of about 2 µm.

Lastly, the invention relates to a system for carrying out the process according to the invention, said system comprising:
- means for hydrating by contacting the legume raw material with an aqueous solution;
- means for flash-boiling the hydrated legume raw material
- a columnar recipient, typically an agitating device, presenting a first and a second plane and a heated circumferential surface,
- chamber surrounding the columnar recipient with means for air-sealing,
- at least one pump for applying high vacuum and a vacuum inlet configured to apply a high vacuum in the chamber, said high vacuum presenting an absolute atmospheric pressure of less or equal to 123 mbar, less or equal to 100 mbar, less or equal to 50 mbar, preferably less or equal to 35 mbar, more preferably less or equal to 15 mbar, even more preferably less or equal to 5 mbar,
- means for injecting water steam at the first plane of the columnar recipient,
- means for setting aside the injected water steam with the off-flavors compounds from the second plane of the columnar blending device, and
   optionally
- means for hydrating for the content of the columnar recipient; and/or
- means for milling raw legume material.

In one embodiment:
- the means for hydrating by contacting the legume raw material with an aqueous solution are selected from at least one sprayer, typically at least one sprayer configured to spray an open weave belt conveyor, and/or at least one water bath; and/or
- the heating means for flash-boiling the hydrated legume raw material are selected from heated, typically steam jacketed, screw conveyor; and/or
- the columnar recipient is a blending device, typically is the blending device being a conical blender; and/or
- the heated circumferential surface means of the columnar blending device is a heated water-jacketed circumferential surface; and/or
- the means for air-sealing the chamber are pneumatically operated valves, typically globe-type valves; and/or
- the means for injecting water steam at the first plane of the columnar blending device are at least one steam nozzle,
- the means for recovering the injected water steam with the off-flavor compounds from the second plane of the columnar blending device are steam condensing means, typically selected from at least one chiller heat exchanger, and
- the optional means for hydrating for the content of the columnar blending device are selected from at least one water sprayer.

The means for setting aside the injected water steam with the off-flavor compounds may be configured between the second plane of the columnar blending device and the pump inlet.

In one embodiment, the system may further comprise at least one of the following:
- means for controlling the temperature, the pressure, the water flow and the steam flow of the system, and/or
- means for filtering the air in the system.

### DEFINITIONS

In the present invention, the following terms have the following meanings:

**"About",** preceding a figure means plus or less 10% of the value of said figure, preferably plus or less 5% of the value of said figure, in particular plus or less 1% of the value of said figure.

**"Raw food material":** refers to any edible material suitable for its use as such or after treatment and/or transformation as a food material.

**"Legume"** refers to the fruit or seed of leguminous plants. Non-limiting examples include alfalfa, clover, beans and peas (e.g., adzuki beans, broad beans, fava beans, bell beans, field beans, horsebeans, kidney beans, snap beans, chick peas, calvance peas, chestnut beans, dwarf peas, garbanzo beans, gram peas, yellow grams, cowpeas, asparagus beans, black eyed peas, black eyed beans, crowder peas, field peas, southern peas, frijoles, guar beans, cluster beans, hyacinth beans, bonavist, lablab, lima beans, butter beans, mung beans, dry peas, podded peas, snap peas, chicharo, lentils, lupins, peanuts, pigeon peas, soybeans, tepary beans, and vetch), mesquite, carob, and tamarind. In some preferred embodiments, the legume is pea and a legume flour is pea flour. In highly preferred embodiments, the legume is yellow split pea.

**"Flavor"** refers to a quality that is detectable by taste and/or smell.

**"Off-flavor"** refers to steam volatile compounds (SVOCs). Typically, SVOCs present an undesirable flavor, such as a bitter flavor or a characteristic flavor of the raw flour.

**"Off-flavor compound"** refers to a molecule that provides off-flavor to a product. In preferred embodiments, off-flavor compounds are non-volatile off-flavor compounds, or steam-volatile off-flavor compounds. Flavor is a major factor limiting the use of many vegetable protein ingredients in foods. For example, pulses (i.e., dried edible seeds of certain plants in the legume family) may contain off-flavors such as (but not limited to) beany, fatty, earthy, bitter, astringent, etc. notes that are a barrier to the expansion of pulse ingredients into mainstream food applications.

**"Non-volatile flavor compounds"** refers to molecules that provide flavor to a product, but are not volatile in the sense that they may not be removed by methods such as evaporation under atmospheric pressure. The term applies to both liquids and solids.

**"Food product"** refers to any edible product, such as crackers, breads (e.g., rye, wheat, oat, potato, white, whole grain products, mixed flours, loaves, twists, buns, rolls, pitas, matzos, focaccia, melba toast, zwieback, croutons, soft pretzels, soft and hard bread sticks, heat and serves), toaster pastries, cookies, Danish, croissant, tarts, pie crusts, pastries, muffins, brownies, sheet cakes, donuts, snack foods (e.g., pretzels, tortilla chips, corn chips, potato chips, fabricated snacks, fabricated potato crisps, extruded snacks, extruded filled snacks, trail mix, granola, snack mixes, shoe-string potatoes), flours, corn meal, polenta, mixes (e.g., cake mixes, biscuit mixes, brownie mixes, bread mixes, pancake mixes, crepe mixes, batter mixes, pizza dough), refrigerated doughs (e.g., biscuits, breads, bread sticks, croissants, dinner rolls, pizza dough, cookies, Danish, brownies, pie crust), frozen foods (e.g., pie crusts, pies, tarts, turnovers, pizzas, food pockets, cakes, French fries, hash browns, breaded products such as chicken and fish, breaded vegetables), bagels, breakfast cereals, biscuits, vegetables (e.g., dried, grilled, roasted, broiled, fried, vacuum dried), taco shells, hash browns, mashed potatoes, toast, grilled sandwiches, flour and corn tortillas, crepes, pancakes, waffles, batters, pizza crust, rice, herbs, spices, nuts, nut-based foods (e.g., peanut butter, foods containing chopped nuts), fruit (e.g., dried, grilled, roasted, broiled, fried, vacuum dried, baked, jellies, pie fillings, flambes, raisins), hush puppies, alcoholic beverages (e.g., beers and ales), products comprising roasted cocoa beans (e.g., cocoa, chocolates, confectionary coatings, hot chocolate, hot chocolate mixes, candy bars), and animal foods (e.g., dog food, cat food).

**"Food product"** also includes a beverage or beverages. The beverage products disclosed herein include ready to drink liquid formulations, beverage concentrates, and the like. Beverages include, e.g., carbonated and non-carbonated soft drinks, fountain beverages, frozen ready-to-drink beverages, coffee beverages, tea beverages, dairy beverages, powdered soft drinks, purees, as well as liquid concentrates, flavored waters, enhanced waters, fruit juice and fruit juice-flavored drinks, sport drinks, and alcoholic products.

**"Protein content"** refers to the relative protein content of a material as ascertained by A.O.C.S. (American Oil Chemists Society) Official Methods Be 4-91 (1997), Aa 5-91(1997), or Ba 4d-90(1997), each incorporated herein in its entirety by reference, which determine the total nitrogen content of a material sample as ammonia, and the protein content as 6.25 times the total nitrogen content of the sample.

**"Steam-volatile"** in the context of the present invention refers to compounds, such as off-flavor compounds, that can be removed from the raw plant material upon contact with high-vacuum steam. The steam-volatile compound removal under high-vacuum may include (1) lowering the boiling point of the steam-volatile compound thereby volatilizing it and removing it from the raw plant material under high-vacuum conditions and/or (2) the diffusion of the steam-volatile compound to the outer surfaces of the raw plant material and the removal of steam-volatile compound by the high-vacuum steam, typically thanks to the hydrogen bonds formed between the steam and the off-flavor compounds. In other terms, diffusion takes place due to the inherent humidity or the hydration of the legume raw material which creates the pathways for SVOCs to diffuse to the surface of the legume. Once the SVOCs reach the surface of the pea, they are removed from the surface of the pea by forming hydrogen bonds with the high-vacuum steam. Preferably, the steam-volatile compound removal under high-vacuum includes the diffusion (2) of the steam-volatile compounds as detailed above. It is therefore understood that even if compounds are not volatile *strictu sensu* under high vacuum conditions, they are rendered steam-volatile thanks to the diffusion phenomena carried out under high vacuum steam conditions.

### DETAILED DESCRIPTION

### Treatment process

This invention first relates to a process for treating a legume raw material, comprising a step of steam-stripping under high vacuum by blending the legume raw material by injecting water steam, said water steam presenting a temperature ranging from about 30°C to about 50°C.

According to the invention, the steam-stripping step aims at removing at least part of the off-flavor compounds of the legume raw material. In preferred embodiments, the steam-stripping step aims at removing substantially all, preferably all, of the off-flavor compounds of legume raw material. Removing all the off-flavor compounds of the legume raw material means that, after the steam-stripping step, the amount of off-flavor compounds in the legumeraw material is lower than the detection limit according to classical suitable analysis techniques or the human taste perception threshold, preferably the human perception threshold. In one example, the analysis techniques comprise or consist of analytical chemistry techniques such as for example Gas Chromatography coupled to Mass Spectrometry (GC-MS) or to a Fire Ionization Detector (GC-FID). In the case that the human detection threshold is lower than the analytical detection threshold the analysis techniques may encompass the sensory scoring of the plant and/or raw food material by a group of human subjects. Additionally or alternatively, the analysis techniques may encompass Gas chromatography coupled to Olfactometry (GC-O), a technique that integrates the separation of volatile compounds using a gas chromatograph with the detection of odor using an olfactometer (human assessor).

The legume raw material comprises at least one off-flavor compound. Said off-flavor compound is susceptible, if it remains in the legume raw material, to alter the odor and/or taste of the legume raw material.

The legume raw material, is preferably a pea, even more preferably yellow split peas. Other plants and/or raw food materials to be treated as examples include but are not limited to plant-based flours, milk powder, onions, garlic, avocado oil, fish oil, marula oil.

The legume raw material to be treated according to the invention comprises starch, proteins and off-flavor compounds. Advantageously, the process according to the invention allows the removal of the off-flavor compounds that are rendered steam-volatile as defined above under the high-vacuum conditions of the process without subjecting the legume raw material at high temperatures, thereby keeping starch and proteins, preferably the proteins substantially intact.

As defined above, off-flavor compounds are steam-volatile compounds, preferably steam-volatile under the high vacuum conditions according to the invention. Typically, the steam-volatile compounds can be removed by the high-vacuum steam such as for example by forming hydrogen bonds with the high-vacuum steam. In some examples, the off-flavor compounds are selected from the group consisting of aldehydes, alcohols, ketones, acids, pyrazines, and sulfur compounds. In examples, the off-flavor compounds are steam-volatile.

The steam-stripping step is performed under high vacuum of less or equal to about 123 mbar, less or equal to about 100 mbar, less or equal to about 50 mbar, preferably less or equal to about 35 mbar, more preferably less or equal to 15 mbar, even more preferably less or equal to about 5 mbar, such as for example lower or equal to 1 mbar, or lower than 0.1 mbar.

The water steam is injected in the reactor, typically a columnar recipient, to blend the legume raw material. The water steam is injected in the form of water steam, typically at the high-vacuum and temperature conditions of the process as defined above. The water steam is injected in the form of liquid water having a temperature of about 30°C to about 50°C, that is instantly converted in water steam upon subjection to the high-vacuum conditions of the process. The suitable amount and flow rate of the water steam will depend on several parameters such as the nature of the legume material, the amount of said legume material and/or the volume of the reactor. As an example, the water steam flow rate is comprised between 10 and 1000 kg/hour, preferably between 50 and 200 kg/hour. In some examples, the water steam flow rate may be of about 100kg per hour, for instance for a 4 tons batch.

The generated vapors comprising off-flavors may be removed in this steam-stripping step. Typically, the water steam after being injected in the legume raw material removes the off-flavors and the generated water-steam comprising off-flavors may be condensed on a surface, preferably with a chiller heat exchanger.

The water steam presents a temperature ranging from about 30°C to about 50°C. It is understood that when the water steam is injected in the form of liquid water having a temperature of about 30°C to about 50°C, that it is instantly converted in water steam upon injection to the high-vacuum conditions of the process and cooled to the water-steam temperatures detailed above, typically by reaching the saturation temperature in the vacuum conditions inside the columnar device.

The treatment process according to the invention allows the removal of off-flavor compounds from the legume raw material, while maintaining the protein functionality thereof. In addition, the process according to the invention further allows recovery of the separated off-flavors. Finally, the process according to the invention is far lowerdemanding in terms of effluents, waste and energy than currently used treatment processes.

The treatment process according to the invention comprises the steps of:
i. contacting the legume raw material, with an aqueous solution at a temperature ranging from about 5 °C to about 40 °C, leading to a hydrated legume raw material;
ii. blanching the hydrated plant and/or raw food material by heating the hydrated legume material at a temperature comprised between 60°C and 121°C, for a period of 1 to 30 seconds:
iii. rapid cooling the blanched legume material by applying high vacuum while agitating, said high vacuum presenting an absolute atmospheric pressure of less or equal to about 123 mbar, less or equal to about 100 mbar, less or equal to about 50 mbar, preferably less or equal to about 35 mbar, more preferably less or equal to 15 mbar, even more preferably less or equal to about 5 mbar, thereby protecting the legume material from protein denaturation;
iv. steam-stripping under the high vacuum, as described above (iii), by blending the cooled legume raw material by injecting water steam, said water steam presenting a temperature ranging from about 30°C to about 50°C, so as to remove the off- flavor compounds, and
v. drying the legume material by setting aside the injected water steam containing the off-flavor compounds, leading to a dried and deodorized legume material.

Step (i) may be implemented by any suitable technique. For instance, step (i) may be performed by spraying the legume material with an aqueous solution, or by immersing the legume material in an aqueous solution. In some examples, especially when step (i) is performed by immersion in the aqueous solution, the aqueous solution used in step (i) is an aqueous solution with a pH ranging from about 4 to about 5, preferably a pH of about 4.5. Said pH range is especially suitable for most legumes, such as soybeans, yellow split peas, mung beans, cowpeas or lentils, so as to minimize protein leaching.

The duration of step (i) may vary in a wide range, depending among others on the legume raw material, the aqueous solution and the step temperature. Classically, the duration of step (i) may be comprised between 30 minutes and 6 hours, preferably between 2 and 5 hours, in particular about 4 hours.

The temperature of step (i) is comprised between about 5°C and about 40°C.

The hydrated legume material obtained at step (i) preferably presents a moisture content comprised between about 15 and about 25% w/w, preferably a moisture content of about 20% w/w. One skilled in the art is able to adjust the different parameters of step (i) in order to obtain the desired moisture content.

Step (ii) may be implemented by any suitable technique. According to an example, which is excluded from the scope of the invention, Step (ii) aims at disinfecting the legume raw material, and at inactivating enzymes and/or inhibitors thereof. Among enzymes and/or inhibitors thereof that may be inactivated at step (ii), one may cite enzymes causing off-flavors, such as lipoxygenases (for instance LOX-1, LOX-2 and/or LOX-3), which are catalysts for the oxidation of alkenes, lectins and, in particular fatty acids, which have an ability to agglutinate carbohydrate molecules, and protease inhibitors. If step (ii) is performed for a too long time, protein may start deteriorating. If step (ii) is not performed for a sufficient time, enzyme activities, such as LOX activity, may still be present.

According to a first variant, which is excluded from the scope of the invention, step (ii) is implemented at a temperature of about 121°C (variant step iia), for about 1 to about 5 seconds, thereby blanching by flash heating inactivation of the enzymes. According to a second variant, which is excluded from the scope of the invention, step (iib) is implemented for about 17 to about 30 seconds at a temperature comprised between about 60°C and about 75°C, thereby blanching the hydrated material by prolonged medium temperature enzyme inactivation.

Lipoxygenase (LOX) enzymes have been reported as responsible for the development of the characteristic SVOC off-flavor compounds such as the beany or grassy off-flavors in legume seed products, and for the instability and reversion of extracted oils during storage. In one example, the Lipoxygenase activity is reduced below 100 units, preferably below 50 units, even more preferably the Lipoxygenase activity is non-detectable. Any means known in the art for measuring the Lipoxygenase activity can be applied. For example, a sample of the legume raw material of step (ii) may be blended, diluted with additional water at different concentrations, incubated with the LOX substrate potassium linoleate. The Lipoxygenase activity may thus be calculated by measuring the optical density variation over time.

Step (iii) may be implemented by any suitable technique. The high vacuum of step (iii) implies a pressure of less or equal to about 123 mbar, less or equal to about 100 mbar, less or equal to about 50 mbar, preferably less or equal to about 35 mbar, more preferably less or equal to 15 mbar, even more preferably less or equal to about 5 mbar, such as for example lower or equal to 1 mbar, or lower than 0.1 mbar. The temperature to which the blanched legume raw material is cooled may be comprised between about 2°C and 10°C. Rapid cooling means that the cooling of step (iii) is performed in less than 30 minutes, preferably less than 10 minutes, in particular less than 5 minutes. Advantageously the cooling step (iii) is performed in less than 1 minute, preferably less than 30 seconds, in particular less than 10 seconds. The cooling step (iii) may performed in less than 5 seconds, preferably less than 3 seconds, in particular less than 1 second. Agitation at step (iii) may be performed for instance by mechanical and/or magnetic stirring, for instance with screws. Step (iii) is implemented in a columnar blending device presenting a first plane, a second plane and a heated circumferential surface.

When step (iii) is implemented in a columnar device as described above, step (iv) is implemented by injecting the water steam to the first plane of the columnar device.

Step (v) may be implemented by any suitable technique. For instance, step (v) may be carried-out by condensation, typically with a chiller heat exchanger. The temperature of step (v) may vary in a wide range. In some examples, excluded from the scope of the invention, the temperature used to condense the vapors at step (v) is comprised between about -10°C and 10°C. When step (iii) is implemented in a columnar device as described above, the injected water steam containing the off-flavor compounds may be recovered at step (v) from the second plane of the device. Once step (v) is completed, the pressure may be restored to atmospheric pressure with atmospheric air or nitrogen.

Each step or group of steps of the process according to the invention may be repeated several times if necessary and/or to obtain a desired level of treatment.

In some embodiments, the process according to the invention further comprises at least one step (vi), wherein the dried and deodorized legume material of step (v) is hydrated, typically with water spraying, and steps (iv') and (v') are applied. Steps (iv') and (v') are identical to steps (iv) and (v) respectively. Steps (iv') and (v') may also be referred to as a new cycle of steps (iv) and (v).

In some embodiments, the process according to the invention optionally further comprises a step (vii) of milling the deodorized legume raw material to obtain a legume raw material flour. The legume raw food material flour obtained at step (vii) comprises starch and proteins.

In some embodiments where the process of the invention comprises a milling step (vii), the process according to the invention further comprises a step (viii) of fractionating the deodorized legume raw material flour into a deodorized protein-rich fraction and a deodorized starch-rich fraction, typically by air-classification milling.

The protein-rich fraction and the starch-rich fraction may be independently further used in different applications. In some embodiments, the deodorized protein-rich fraction presents an average particle size of about 2 µm.

In an example, the treatment process further comprises, after step (iv), a step of recovering at least one off-flavor component.

### Deodorized product

It is also disclosed a product, excluded from the scope of the invention, that may be obtained by the treatment process.

The product may be a dried and/or deodorized plant and/or raw food material, preferably obtained in step (v) of the process, a plant and/or raw food material flour, preferably obtained in step (vii) of the process, or a deodorized protein-rich fraction, preferably obtained in step (viii) of the process.

The deodorized protein-rich fraction is a deodorized protein concentrate presenting a protein content of at least 30% by weight, preferably ranging from 30% to 70% by weight, even more preferably from 40% to 70% by weight or from 40% to less than 60% by weight, on a dry weight basis.

The deodorized protein-rich fraction is a deodorized protein isolate presenting a protein content of more than 70% by weight, more than 80% by weight, preferably more than 90 % or more than 95% by weight, on a dry weight basis.

The product presents an hexanal content of less than 3 ppb (3000 pg/g), preferably less than 2 ppb, even more preferably less than 1.4 ppb of hexanal on dry matter of the product (DM).

The product presents an hexanal content of less than 50 pg of hexanal per g of dry matter (DM). In one example, the hexanal content is less than 40 pg/g (DM). In one example, the hexanal content is less than 30 pg/g (DM). In one example, the hexanal content is less than 20 pg/g (DM). In one example, the hexanal content is less than 15 pg/g (DM). In one example, the hexanal content is less than 10 pg/g (DM). In one example, the hexanal content is less than 5 pg/g (DM). In one example, the hexanal content is less than 10 pg/g (DM). In one example, the hexanal content is non detectable.

In one example, the product presents an 2-methoxy-3-(1-methylpropyl)pyrazine content of less than 15 pg of 2-methoxy-3-(1-methyl propyl)pyrazine per g of dry matter (DM). In one example, the 2-methoxy-3-(1-methylpropyl)pyrazine content is less than 10 pg/g (DM). In one example, the 2-methoxy-3-(1-methylpropyl)pyrazine content is less than 8 pg/g (DM). In one example, the 2-methoxy-3-(1-methylpropyl)pyrazine content is less than 7 pg/g (DM). In one example, the 2-methoxy-3-(1-methylpropyl)pyrazine content is less than 5 pg/g (DM). In one example, the 2-methoxy-3-(1-methylpropyl)pyrazine content is non detectable.

In one example, the product presents an 2-methoxy-3-isopropyl-5-methylpyrazine or 2-methoxy3-isopropyl-6-methylpyrazine content of less than 15 pg of 2-methoxy-3-isopropyl-5-methylpyrazine or 2-methoxy3-isopropyl-6-methylpyrazine per g of dry matter (DM). In one example, the 2-methoxy-3-isopropyl-5-methylpyrazine or 2-methoxy3-isopropyl-6-methylpyrazine content is less than 10 pg/g (DM). In one example, the 2-methoxy-3-isopropyl-5-methylpyrazine or 2-methoxy3-isopropyl-6-methylpyrazine content is less than 8 pg/g (DM). In one example, the 2-methoxy-3-isopropyl-5-methylpyrazine or 2-methoxy3-isopropyl-6-methylpyrazine content is less than 7 pg/g (DM). In one example, the 2-methoxy-3-isopropyl-5-methylpyrazine or 2-methoxy3-isopropyl-6-methylpyrazine content is less than 5 pg/g (DM). In one example, the 2-methoxy-3-isopropyl-5-methylpyrazine or 2-methoxy3-isopropyl-6-methylpyrazine content is non detectable.

In one example, the product presents a 2-methyl-3-isopropylpyrazine content of less than 15 pg of 2-methyl-3-isopropylpyrazine per g of dry matter (DM). In one example, the 2-methyl-3-isopropylpyrazine content is less than 10 pg/g (DM). In one example, the 2-methyl-3-isopropylpyrazine content is less than 8 pg/g (DM). In one example, the 2-methyl-3-isopropylpyrazine content is less than 7 pg/g (DM). In one example, the 2-methyl-3-isopropylpyrazine content is less than 5 pg/g (DM). In one example, the 2-methyl-3-isopropylpyrazine content is non-detectable.

In one example, the product presents less than 15 pg, preferably less than 10pg of the sum of hexanal, 2-pentyl-furan, (E)-2,4, heptadienal and 1-octen-3-ol, per gram of the product, even more preferably less than 5 pg, or less than 4 pg of the sum of hexanal, 2-pentyl-furan, (E)-2,4, heptadienal and 1-octen-3-ol per gram of dry matter.

In one example, the product presents more than 2000 ppb, more than 2500 ppb, more than 3000 ppb, more than 3200 ppb, or more than 3500 ppb of 3-methylbutanal. In one example, the amount of 3-methylbutanal ranges from 2000 to 4000 ppb. In one example, the amount of 3-methylbutanal ranges from 3100 ppb to 4000 ppb or from 3200 ppb to 4000ppb.

In one example, the product presents more than 50 ppb, more than 55 ppb, more than 60 ppb, more than 61 ppb, or more than 62 ppb of benzaldehyde.

Preferably, the product presents no detectable trypsinase inhibitors and/or lipoxygenase activity, and/or no detectable traces of hexanal and/or by-products thereof, no detectable traces of organic solvents and no denaturated proteins.

The amount of trypsinase inhibitors may range between 0.5 and 10 IU/mg. The determination of trypsinase inhibitors may be carried out by extracting said inhibitors from the product with sodium hydroxide. Increasing volumes of the diluted sample are then put in contact with an excess of trypsin in the presence of *N*-α-benzoyl DL-arginine p-nitroanilide (BAPNA) which will then be hydrolysed into the p-nitroaniline form, absorbing at 410 nm. After blocking the reaction with acetic acid, the color increase is measured with a spectrophotometer at 410 nm. The amount of trypsinase inhibitors is then calculated from the rate of decrease of the coloration. A unit (IU) is arbitrarily defined as the trypsin amount of enzyme required to cause an increase in 0.01 of the absorbance at 410 nm units for 10 ml of reaction mixture under the conditions of the method AOCS Ba 12-75. According to a first example, the amount of trypsinase inhibitors is less than 2 IU/mg. According to a second example, the amount of trypsinase inhibitors ranges from 2 to 6 IU/mg. According to a third example, the amount of trypsinase inhibitors ranges from 6 to 10 IU/mg.

Undenatured proteins have a high nitrogen solubility index (N.S.I.). A generally accepted method for the determination of protein solubility is the (N.S.I.) method of the American Association of Cereal Chemists (AACC method 46-23). Alternatively or additionally, differential scanning calorimetry (DSC) may identify factors contributing to the folding and stability of native biomolecules. These factors include hydrophobic interactions, hydrogen bonds, conformational entropy, and the physical environment. The DSC may highlight the protein folding modifications upon denaturation.

The high-quality, accurate data obtained by DSC provide vital information on protein stability for process development or for the formulation of potential therapeutic candidates.

In one example, the absence of denaturated proteins in the product may be characterized by a nitrogen solubility index that is no more than 20%, preferably no more than 15%, reduced compared to the nitrogen solubility of the plant and/or raw food material proteins (starting non-deodorized material).

In one example, the absence of denaturated proteins in the product may be characterized by at least one of the following:
- A nitrogen solubility index that is no more than 20%, preferably no more than 25 such as for example no more than 10%, typically no more than 12%, reduced compared to the nitrogen solubility of the plant and/or raw food material proteins, and/or
- A differential calorimetry scan substantially identical to the differential calorimetry scan of the plant and/or raw food material proteins.

In one example, the product presents, an hexanal content of less than 50 pg/g, and presents at least one of the following:
- a hexanal content of less than 3 ppb, preferably less than 2 ppb, even more preferably less than 1.4 ppb of hexanal on dry matter of the product;
- a nitrogen solubility index that is no more than 20%, preferably no more than 15%, reduced compared to the nitrogen solubility of the plant and/or raw food material proteins.

In one example, the product presents, a hexanal content of less than 50 pg/g, and presents at least one of the following:
- A nitrogen solubility index that is substantially identical to the nitrogen solubility index of the legume raw material proteins, and/or
- A differential calorimetry scan substantially identical to the differential calorimetry scan of the legume raw material proteins.

In one example, when the legume is pea, the proteins of the pea protein raw material, the pea flour or the pea protein-rich fraction present a nitrogen solubility index of at least 50%, of at least 55% of at least 58% of at least 60% of at least 62%, or of at least 65%.

In one example, the absence of denaturated proteins in the product may be characterized by the maintaining of the urease activity in the product. Urease is one heat- sensitive protein that in its isolated form begins to denature at temperatures above 45 °C for 60 minutes. Therefore, the maintaining of the urease activity clearly shows that the more heat-resistant structural proteins of the product are non-denaturated. In one example, the urease activity is no more than 5%, typically no more than 2%, reduced compared to the urease activity of the plant and/or raw food material.

In one example, the proteins of the product present water solubility of greater than 40%, greater than 45%, greater than 50% or greater than 55% o. In one example, the proteins of the product present water solubility of greater than 50% or greater than 55%. %. In one example, the proteins of the product present water solubility of greater than 55%. The water solubility of the proteins may be determined by any means known in the art. In one example, the water solubility is determined by extracting the proteins from the product and assessing the amount/percentage of proteins that are soluble in the water. In one example, the amount of water soluble proteins is greater than 250 g of proteins per liter of water. In one example, the amount of water soluble proteins is greater than 300 g of proteins per liter of water. In one example, the amount of water soluble proteins is greater than 350 g of proteins per liter of water. In one example, the amount of water soluble proteins is greater than 400 g of proteins per liter of water. In one example, the amount of water soluble proteins is greater than 450 g of proteins per liter of water. In one example, the amount of water soluble proteins is greater than 500 g of proteins per liter of water. In one example, the amount of water soluble proteins is greater than 550 g of proteins per liter of water. In one example, the amount of water-soluble proteins is greater than 600 g of proteins per liter of water.

The product may be for instance used in products selected from the group consisting of food nutrition products, animal food products, pharmaceuticals, nutraceuticals, cosmetics, and/or products to be used in industrial markets.

Examples of food nutrition products that may use the compound include beverages, dairy products, such as cheese or yoghurt, confectionery products, savory products and specialized nutrition products such as sport nutrition products and/or weight management products.

When the product is used in a food nutrition product, the product is especially suitable:
- for improving smoothness and mouthfeel of beverage and dairy products,
- for creating milk alternatives in dairy products,
- for formulating textures, crispiness and crunch in snacks,
- for improving the taste of batters and coatings,
- for reformulating end products to reduce costs whilst improving quality,
- for producing allergen-free products.

When the product is used in an animal food product, the product is especially suitable for enriching the product in protein, and/or for texturizing the product.

When the product is used in a pharmaceutical and/or a nutraceutical product, the product is especially suitable for providing digestibility, viscosity gelation properties, and/or stability to the product. Examples of pharmaceutical and/or nutraceuticals products include swallowable tablets, hard capsules, blends, granules, and pellets premixes.

When the product is used in a cosmetic product, the product is especially a starchcontaining product and may be included as sebum absorber, as skin mattifying agent, as odor control agent, as gelling agent, as high cushion effect agent, and or as agent allowing non-tacky powdery feeling.

Another example is a food composition comprising the described product.

### Treatment system

A object of the invention is a system suitable for implementing the treatment process according to the present invention.

Typically, the system comprises:
- means for hydrating by contacting the legume raw material with an aqueous solution;
- means for flash-boiling the hydrated legume raw material,
- a columnar recipient, typically an agitating device, presenting a first and a second plane and a heated circumferential surface,
- a chamber surrounding the columnar recipient with means for air-sealing,
- at least one pump for applying high vacuum and a vacuum inlet configured to apply a high vacuum of an absolute atmospheric pressure in the chamber of less or equal to about 123 mbar, less or equal to about 100 mbar, less or equal to about 50 mbar, preferably less or equal to about 35 mbar, more preferably less or equal to 15 mbar, even more preferably less or equal to about 5 mbar,
- means for injecting water steam at the first plane of the columnar recipient,
- means for setting aside the injected water steam with the off-flavors compounds from the second plane of the columnar recipient, and optionally
- means for hydrating the content of the columnar blending device recipient;
   and/or
- means for milling the legume raw material.

In some embodiments, the means for hydrating by contacting the legume raw material with an aqueous solution are selected from at least one sprayer, typically at least one sprayer configured to spray an open weave belt conveyor, and/or at least one water bath.

In some embodiments, the heating means for flash-boiling the hydrated legume raw material are selected from heated, typically steam jacketed, screw conveyors.

In some embodiments, the columnar recipient is a blending device, the blending device being typically a conical blender.

In some embodiments, the heated circumferential surface of the columnar blending device is a heated water-jacketed circumferential surface.

In some embodiments, the means for air-sealing the chamber are pneumatically operated valves, typically globe-type valves.

In some embodiments, the means for injecting water steam at the first plane of the columnar blending device are at least one steam nozzle.

In some embodiments, the means for recovering the injected water steam with the off-flavor compounds from the second plane of the columnar blending device are steam condensing means, typically selected from at least one chiller heat exchanger.

In some embodiments, the optional means for hydrating the content of the columnar blending device are selected from at least one water sprayer.

In some embodiments, the means for setting aside the injected water steam with the off-flavor compounds are configured between the second plane of the columnar blending device and the pump inlet.

In some embodiments, the system further comprises means for controlling the temperature, the pressure, the water flow and/or the steam flow, and/or means for filtering the air in the system.

### BRIEF DESCRIPTION OF THE FIGURES

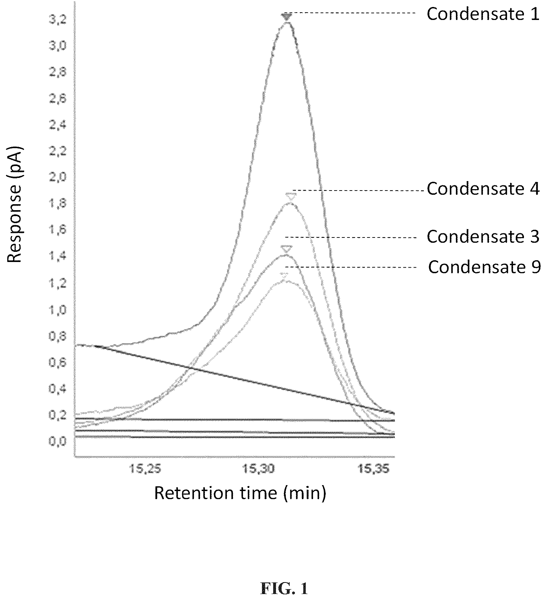

**Figure 1** is a graph showing the stacked GC-FID chromatograms of the linoleic acid removal in the condensates 1, 3, 4 and 9 according to the Example 2 results.

### EXAMPLES

The present invention is further illustrated by the following examples.

### Example 1: Treatment of yellow split peas with a process according to the invention

The process according to the invention is implemented for the treatment of yellow split peas.

### Receiving

Yellow split peas are sold in bulk and are already dehulled. The bulk delivery is discharged from the delivery truck into a receiver, which has a square-to-round configuration.

The bulk material is conveyed from the receiving hopper to the preparation section, using a standard screw conveyor, the speed of which is matched to the capacity of the swing tray/screening equipment.

### Screening

The dry yellow split peas are screened to remove foreign material. The screening unit is fed by a swing tray conveyor, which is matched to the capacity of the screen.

### Hydration

Following screening, the cleaned split peas are conveyed at slow speed to the next receiving hopper. The conveyor is an open weave belt, and hydration takes place by spraying water onto the dry product whilst conveying. The purpose of spraying water onto the product is to hydrate the spores and expand the matrix to allow inactivation of unwanted enzymes.

The duration of this step is determined by the water temperature, and adjusted to allow for water absorption of >20% m/m. At 20°C, the process takes ca 4 hours. The upper temperature limit of the water is 40°C. The optimum moisture percentage is 20%. Variation of +-5% would still work for this process.

### Blanching

A heated screw conveyor is used to heat the hydrated product to boiling point for a predetermined time. At boiling point, the retention time is between 1 and 5 minutes.

### Cooling

The jacketed and steam heated conveyor discharges directly into a jacketed conical blender, kept under vacuum.

Sealing is maintained using pneumatically operated globe type rotary valves. Jacket temperature is controlled at maximum 47°C using a dimple jacket and warm water. Agitation is by 4 internal screws, 2 of which rotate along the perimeter and 2 rotating internally, thus preventing development of temperature differentials. The hydrated cotyledons are immediately cooled to ca 5°C as a result of rapid evaporation under vacuum. Freezing is prevented by heating the cotyledons continuously at the 47°C surface.

### Steam Stripping & Drying

Whilst some stripping occurs during loading (transfer of material from screw conveyor to conical blender), the main stripping action is performed by introducing live steam at the bottom of the cone, whilst the blender is under vacuum. Vacuum is maintained at <1 mbar. Usually, stripping is achieved within 4 hours maximum, dependent upon the degree of contamination. Older feedstock will require the full 4 hours.

There is no upper time limit to the process. Extended stripping beyond the minimum time will result in energy wastage, but the product will not be affected adversely.

If steam stripping is not completely achieved after the initial drying action is completed, water can be added via a spray nozzle fitted to the blender dome which will allow us to rehydrate. The water is added whilst the blender is in operation, but without vacuum. A maximum of 20% water can be added over a period of 30 minutes, after which the vacuum is restored and the stripping process is resumed to. The process is suspended after a sample has verified completion.

The water vapor in the system (together with the volatile compounds) passes through a chiller heat exchanger. The Chiller heat exchanger cools the water vapor and condenses it at 0.5 degrees Celsius. The condensed water is collected in a small receiver situated under the chiller heat exchanger. The vacuum pump maintains the vacuum within the conical blender whilst the condensation of the water vapor is happening.

The chiller is located in line near the outlet (Top of the blender). In other words, the positioning of the chiller must prevent the water vapor from reaching the vacuum pump.

### Classifier Milling

The cleaned, dry cotyledons are released from the blender into a screw conveyor, which feeds a buffer hopper holding 4 hours' stock. The entire line, including hopper, is sealed.

Breathing is via hepa filtration, where necessary.

The classifier mills are fed by screw conveyors, each with VFD control. The VFD's are in turn controlled by switching ammeters, which will optimize flow rates. In the event that the moisture content exceeds 5%, the rate of milling will start to decline. The mills will dry moist incoming material to maximum 10% m/m.

Classified material is conveyed by air through a reverse pulse filtration system. Air is sucked through the filter bags and discharged to atmosphere. Incoming air is filtered using hepa filtration. Optional recycling of air is possible, using dehumidifiers.

The filter bags are PTFE impregnated to ensure complete dislodging of powder during reverse pulses.

The frequency of the reverse pulse process is fixed, using a dedicated controller. US supplier Donaldson is preferred.

The classified, milled powder is collected in the filter baghouse. The rotary valve fitted to the outlet at the bottom of the collection hopper is run continuously, discharging into a screw conveyor, which in turn discharges into a holding bin.

### Screening

As a precaution and HACCP (Hazard Analysis and Critical Control Point) step, the milled material is screened using a screen aperture of no more than 53 micron. Smaller apertures of 25 micron are normally preferred for beverage preparation.

The screen is vibrated in 3 dimensions, and fitted with inert ceramic balls to dislodge any particles which may block portions of the screen.

Any oversize material is returned by screw conveyor to the classifier mills via the holding hopper.

Screened particles are conveyed by screw to the packaging section holding vessel.

### Example 2: Removal of high-vacuum steam volatile off-flavors in the process condensates

The process according to the invention is implemented in 10 kg yellow split peas, hydrated for 4 fours in a water bath, blanched for 17 seconds at a water bath of 67°C then subjected to high-vacuum of 30 mbar will injecting steam in the form of 50°C water that instantly converted to steam in the high-vacuum conditions.

The high-vacuum steam was condensed on a chiller of 5°C thereby supplying concentrates comprising the off-flavor compounds that were collected every 30 minutes in order to monitor the removal of high-vacuum steam volatile off-flavors by dosing the in the steam condensed on the chiller heat-exchanger. The analysis of the condensates is carried out by Gas-chromatography coupled to a Flame Ionization detector (GC-FID, Agilent 8890^{®}) using a calibration method, wherein the amount of the removed off-flavors was calculated based on the Area under the Curve (AUC, pA× s) correlated to the AUC of standard samples of the following high-vacuum steam volatile compounds (SVOCs): (1) hexanal, (2) hexanoic acid and (3) linoleic acid. The results are presented in table 1.

| | Condensate 1 | Condensate 3 | Condensate 4 | Condensate 9 |
|---|---|---|---|---|
| Hexanal (pA × s / ppm) | 18.53 / 0.37 | 2.50 / 0.22 | 1.295 / 0.11 | 1.87 / 0.16 |
| Hexanoic acid (pA × s / ppm) | 7.29 / 1.34 | 1.75 / 0.36 | 1.41 / 0.29 | 1.50 / 0.31 |
| Linoleic acid (pA × s / ppm) | 6.60 / 2.59 | 4.86 / 2.78 | 5.47 / 2.07 | 3.40 / 1.29 |

Table 1. Results of the GC-FID monitoring of the steam-volatile off-flavors' removal in the condensates

Hexanal removal between the first and fourth condensates indicates that the process is effective and that hexanal levels are decreasing as time progresses. This is further corroborated by the fact that hexanoic acid, and hexanal oxidation product also and linolenic acid, an off-flavor source that is further associated with plant material fermentation, follows the same trend throughout the deodorization process.

A visual representation of the linoleic acid removal in the condensates is presented in Figure 1.

Furthermore, the amount of hexanoic acid and linoleic acid was calculated in the treated sample before and after one cycle of steam stripping. The results are presented in table 2.

| | Untreated peas | Peas after one steam-stripping cycle |
|---|---|---|
| Hexanoic acid (pA × s / ppm) | 1.55 / 0.32 | 1.27 / 0.26 |
| Linoleic acid (pA × s / ppm) | 3.54 / 1.34 | 0.90 / 0.34 |

Table 2. Results of the GC-FID monitoring of the steam-volatile off-flavors removal in the treated raw legume material.

Thus, the present process leads to the off-flavor removal even after only one cycle of steam-stripping according to the invention.
the positioning of the chiller must prevent the water vapor from reaching the vacuum pump.

### Classifier Milling

The cleaned, dry cotyledons are released from the blender into a screw conveyor, which feeds a buffer hopper holding 4 hours' stock. The entire line, including hopper, is sealed.

Breathing is via hepa filtration, where necessary.

The classifier mills are fed by screw conveyors, each with VFD control. The VFD's are in turn controlled by switching ammeters, which will optimize flow rates. In the event that the moisture content exceeds 5%, the rate of milling will start to decline. The mills will dry moist incoming material to maximum 10% m/m.

Classified material is conveyed by air through a reverse pulse filtration system. Air is sucked through the filter bags and discharged to atmosphere. Incoming air is filtered using hepa filtration. Optional recycling of air is possible, using dehumidifiers.

The filter bags are PTFE impregnated to ensure complete dislodging of powder during reverse pulses.

The frequency of the reverse pulse process is fixed, using a dedicated controller. US supplier Donaldson is preferred.

The classified, milled powder is collected in the filter baghouse. The rotary valve fitted to the outlet at the bottom of the collection hopper is run continuously, discharging into a screw conveyor, which in turn discharges into a holding bin.

### Screening

As a precaution and HACCP (Hazard Analysis and Critical Control Point) step, the milled material is screened using a screen aperture of no more than 53 micron. Smaller apertures of 25 micron are normally preferred for beverage preparation.

The screen is vibrated in 3 dimensions, and fitted with inert ceramic balls to dislodge any particles which may block portions of the screen.

Any oversize material is returned by screw conveyor to the classifier mills via the holding hopper.

Screened particles are conveyed by screw to the packaging section holding vessel.

### Example 2: Removal of high-vacuum steam volatile off-flavors in the process condensates

The process according to the invention is implemented in 10 kg yellow split peas, hydrated for 4 fours in a water bath, blanched for 17 seconds at a water bath of 67°C then subjected to high-vacuum of 30 mbar will injecting steam in the form of 50°C water that instantly converted to steam in the high-vacuum conditions.

The high-vacuum steam was condensed on a chiller of 5°C thereby supplying concentrates comprising the off-flavor compounds that were collected every 30 minutes in order to monitor the removal of high-vacuum steam volatile off-flavors by dosing the in the steam condensed on the chiller heat-exchanger. The analysis of the condensates is carried out by Gas-chromatography coupled to a Flame Ionization detector (GC-FID, Agilent 8890^{®}) using a calibration method, wherein the amount of the removed off-flavors was calculated based on the Area under the Curve (AUC, pA × s) correlated to the AUC of standard samples of the following high-vacuum steam volatile compounds (SVOCs): (1) hexanal, (2) hexanoic acid and (3) linoleic acid. The results are presented in table 1.

| | Condensate 1 | Condensate 3 | Condensate 4 | Condensate 9 |
|---|---|---|---|---|
| Hexanal (pA × s / ppm) | 18.53 / 0.37 | 2.50 / 0.22 | 1.295 / 0.11 | 1.87 / 0.16 |
| Hexanoic acid (pA × s / ppm) | 7.29 / 1.34 | 1.75 / 0.36 | 1.41 / 0.29 | 1.50 / 0.31 |
| Linoleic acid (pA × s / ppm) | 6.60 / 2.59 | 4.86 / 2.78 | 5.47 / 2.07 | 3.40 / 1.29 |

Table 1. Results of the GC-FID monitoring of the steam-volatile off-flavors' removal in the condensates

Hexanal removal between the first and fourth condensates indicates that the process is effective and that hexanal levels are decreasing as time progresses. This is further corroborated by the fact that hexanoic acid, and hexanal oxidation product also and linolenic acid, an off-flavor source that is further associated with plant material fermentation, follows the same trend throughout the deodorization process.

A visual representation of the linoleic acid removal in the condensates is presented in Figure 1.

Furthermore, the amount of hexanoic acid and linoleic acid was calculated in the treated sample before and after one cycle of steam stripping. The results are presented in table 2.

| | Untreated peas | Peas after one steam-stripping cycle |
|---|---|---|
| Hexanoic acid (pA × s / ppm) | 1.55 / 0.32 | 1.27 / 0.26 |
| Linoleic acid (pA × s / ppm) | 3.54 / 1.34 | 0.90 / 0.34 |

Table 2. Results of the GC-FID monitoring of the steam-volatile off-flavors removal in the treated raw legume material.

Thus, the present process leads to the off-flavor removal even after only one cycle of steam-stripping according to the invention.

## Claims

1. A process for deodorizing a legume raw material comprising starch, proteins and off-flavor compounds without denaturating the proteins, said method comprising the steps of:
i. contacting the legume raw material with an aqueous solution at a temperature ranging from about 5 °C to about 40 °C, leading to a hydrated legume material;
ii. blanching the hydrated legume raw material by heating the hydrated legume material at a temperature comprised between 60°C and 121°C, for a period ranging from about 1 to about 30 seconds, thereby blanching the hydrated legume material;
iii. rapid cooling the blanched legume material by applying high vacuum while agitating, said high vacuum presenting an absolute atmospheric pressure of less or equal to 123 mbar, less or equal to 100 mbar, less or equal to 50 mbar, preferably less or equal to 35 mbar, more preferably less or equal to 15 mbar, even more preferably less or equal to 5 mbar, thereby protecting the legume from protein denaturation;
iv. steam-stripping under the high vacuum by blending the cooled legume material by injecting water steam, said water steam presenting a temperature ranging from 30°C to 50°C, so as to remove the off-flavor compounds,
v. drying the legume material by setting aside the injected water steam containing the off-flavor compounds, leading to a dried and deodorized legume material.

2. The process according to claim **1,** further comprising at least one step vi), wherein the dried and deodorized legume material of step v) is hydrated and subjected to a new cycle of steam-stripping and drying according to steps iv) and v).

3. The process according to claim **1** or claim **2,** wherein the legume raw material is selected from peas, typically yellow split peas.

4. The process according to any one of claims **1** to **3,** wherein step i) is carried-out by spraying the legume raw material with an aqueous solution.

5. The process according to any one of claims **1** to **4,** wherein drying step v) is carried-out by condensation, typically with a chiller heat exchanger.

6. The process according to any one of claims **1** to **5,** further comprising the step of milling the deodorized and dried legume raw material into a deodorized legume raw material flour comprising starch and proteins.

7. The process according to claim **6,** further comprising the step of fractionating the deodorized legume raw material flour into a deodorized protein-rich fraction and a deodorized starch-rich fraction, typically by air-classification milling.

8. The process according to claim **7,** wherein the deodorized protein-rich fraction presents an average particle size of about 2 µm.

9. A system for carrying out the process according to any one of claims **1** to **8,** said system comprising:
- means for hydrating by contacting the legume raw material with an aqueous solution;
- means for flash-boiling the hydrated legume raw material
- a columnar recipient, typically an agitating device, presenting a first and a second plane and a heated circumferential surface,
- chamber surrounding the columnar recipient with means for air-sealing,
- at least one pump for applying high vacuum and a vacuum inlet configured to apply in the chamber a high vacuum of an absolute atmospheric pressure of less or equal to 123 mbar, less or equal to 100 mbar, less or equal to 50 mbar, preferably less or equal to 35 mbar, more preferably less or equal to 15 mbar, even more preferably less or equal to 5 mbar,
- means for injecting water steam at the first plane of the columnar recipient,
- means for setting aside the injected water steam with the off-flavors compounds from the second plane of the columnar blending device, and
optionally
- means for hydrating for the content of the columnar recipient; and/or
- means for milling raw legume material.

10. The system according to claim **9,** wherein:
- the means for hydrating by contacting the legume raw material with an aqueous solution are selected from at least one sprayer, typically at least one sprayer configured to spray an open weave belt conveyor, and/or at least one water bath; and/or
- the heating means for flash-boiling the hydrated legume raw material are selected from heated, typically steam jacketed, screw conveyor; and/or
- the columnar recipient is a blending device, typically is the blending device being a conical blender; and/or
- the heated circumferential surface means of the columnar blending device is a heated water-jacketed circumferential surface; and/or
- the means for air-sealing the chamber are pneumatically operated valves, typically globe-type valves; and/or
- the means for injecting water steam at the first plane of the columnar blending device are at least one steam nozzle,
- the means for recovering the injected water steam with the off-flavor compounds from the second plane of the columnar blending device are steam condensing means, typically selected from at least one chiller heat exchanger, and
- the optional means for hydrating for the content of the columnar blending device are selected from at least one water sprayer.

11. The system according to claim **9** or **10,** wherein the means for setting aside the injected water steam with the off-flavor compounds is configured between the second plane of the columnar blending device and the pump inlet.

12. The system according to any one of claims **9** to **11,** further comprising at least one of the following:
- means for controlling the temperature, the pressure, the water flow and the steam flow of the system, and/or
- means for filtering the air in the system.

## Patentansprüche

1. Verfahren zum Desodorieren eines Hülsenfrucht-Rohmaterials, das Stärke, Proteine und Fehlgeschmacksstoffe umfasst, ohne die Proteine zu denaturieren, wobei das Verfahren die folgenden Schritte umfasst:
i. In-Kontakt-Bringen des Hülsenfrucht-Rohmaterials mit einer wässrigen Lösung bei einer Temperatur im Bereich von etwa 5 °C bis etwa 40 °C, wodurch ein hydratisiertes Hülsenfruchtmaterial erhalten wird;
ii. Blanchieren des hydratisierten Hülsenfrucht-Rohmaterials durch Erhitzen des hydratisierten Hülsenfruchtmaterials auf eine Temperatur zwischen 60 °C und 121 °C für einen Zeitraum im Bereich von etwa 1 bis etwa 30 Sekunden, wodurch das hydratisierte Hülsenfruchtmaterial blanchiert wird;
iii. schnelles Abkühlen des blanchierten Hülsenfruchtmaterials durch Anlegen eines Hochvakuums unter Rühren, wobei das Hochvakuum einen absoluten Atmosphärendruck von höchstens 123 mbar, höchstens 100 mbar, höchstens 50 mbar, vorzugsweise höchstens 35 mbar, besonders bevorzugt höchstens 15 mbar, ganz besonders bevorzugt höchstens 5 mbar aufweist, wodurch die Hülsenfrucht vor einer Proteindenaturierung geschützt wird;
iv. Dampfstrippen unter dem Hochvakuum durch Mischen des abgekühlten Hülsenfruchtmaterials unter Einspritzen von Wasserdampf, wobei der Wasserdampf eine Temperatur im Bereich von 30 °C bis 50 °C aufweist, um die Fehlgeschmacksstoffe zu entfernen,
v. Trocknen des Hülsenfruchtmaterials durch Abtrennen des eingespritzten Wasserdampfs, der die Fehlgeschmacksstoffe enthält, wodurch ein getrocknetes und desodoriertes Hülsenfruchtmaterial erhalten wird.

2. Verfahren nach Anspruch 1, ferner umfassend mindestens einen Schritt vi), wobei das getrocknete und desodorierte Hülsenfruchtmaterial aus Schritt v) hydratisiert und einem neuen Zyklus aus Dampfstrippen und Trocknen gemäß den Schritten iv) und v) unterzogen wird.

3. Verfahren nach Anspruch 1 oder Anspruch 2, wobei das Hülsenfrucht-Rohmaterial aus Erbsen, typischerweise gelben Spalterbsen, ausgewählt ist.

4. Verfahren nach einem der Ansprüche 1 bis 3, wobei Schritt i) durch Besprühen des Hülsenfrucht-Rohmaterials mit einer wässrigen Lösung durchgeführt wird.

5. Verfahren nach einem der Ansprüche 1 bis 4, wobei der Trocknungsschritt v) durch Kondensation, typischerweise mit einem Kühlwärmetauscher, durchgeführt wird.

6. Verfahren nach einem der Ansprüche 1 bis 5, ferner umfassend den Schritt des Vermahlens des desodorierten und getrockneten Hülsenfrucht-Rohmaterials zu einem desodorierten Hülsenfrucht-Rohmaterialmehl, das Stärke und Proteine umfasst.

7. Verfahren nach Anspruch 6, ferner umfassend den Schritt des Fraktionierens des desodorierten Hülsenfrucht-Rohmaterialmehls in eine desodorierte proteinreiche Fraktion und eine desodorierte stärkereiche Fraktion, typischerweise durch Windsichtung.

8. Verfahren nach Anspruch 7, wobei die desodorierte proteinreiche Fraktion eine mittlere Partikelgröße von etwa 2 µm aufweist.

9. System zur Durchführung des Verfahrens nach einem der Ansprüche 1 bis 8, wobei das System umfasst:
- Mittel zum Hydratisieren durch In-Kontakt-Bringen des Hülsenfrucht-Rohmaterials mit einer wässrigen Lösung;
- Mittel zum plötzlichen Aufkochen des hydratisierten Hülsenfrucht-Rohmaterials
- einen säulenförmigen Behälter, typischerweise eine Rührvorrichtung, der eine erste und eine zweite Ebene sowie eine beheizte Umfangsfläche aufweist,
- ein Kammer, die den säulenförmigen Behälter umgibt, mit Mitteln zur Luftabdichtung,
- mindestens eine Pumpe zum Anlegen eines Hochvakuums und einen Vakuumeinlass, der dazu ausgebildet ist, in der Kammer ein Hochvakuum mit einem absoluten Atmosphärendruck von höchstens 123 mbar, höchstens 100 mbar, höchstens 50 mbar, vorzugsweise höchstens 35 mbar, besonders bevorzugt höchstens 15 mbar, ganz besonders bevorzugt höchstens 5 mbar anzulegen,
- Mittel zum Einspritzen von Wasserdampf an der ersten Ebene des säulenförmigen Behälters,
- Mittel zum Abtrennen des eingespritzten Wasserdampfs mit den Fehlgeschmacksstoffen von der zweiten Ebene der Säulenmischvorrichtung, und
gegebenenfalls
- Mittel zum Hydratisieren für den Inhalt des säulenförmigen Behälters; und/oder
- Mittel zum Vermahlen von rohem Hülsenfruchtmaterial.

10. System nach Anspruch 9, wobei:
- die Mittel zum Hydratisieren durch In-Kontakt-Bringen des Hülsenfrucht-Rohmaterials mit einer wässrigen Lösung aus mindestens einem Sprühgerät, typischerweise mindestens einem Sprühgerät, das zum Besprühen eines offenmaschigen Bandförderers ausgebildet ist, und/oder mindestens einem Wasserbad ausgewählt sind; und/oder
- die Heizmittel zum plötzlichen Aufkochen des hydratisierten Hülsenfrucht-Rohmaterials aus einem beheizten, typischerweise dampfummantelten Schneckenförderer ausgewählt sind; und/oder
- der säulenförmige Behälter eine Mischvorrichtung ist, typischerweise die Mischvorrichtung ein konischer Mischer ist; und/oder
- das Mittel der beheizten Umfangsfläche der Säulenmischvorrichtung eine beheizte, wasserummantelte Umfangsfläche ist; und/oder
- die Mittel zur Luftabdichtung der Kammer pneumatisch betätigte Ventile, typischerweise Geradsitzventile, sind; und/oder
- die Mittel zum Einspritzen von Wasserdampf an der ersten Ebene der Säulenmischvorrichtung mindestens eine Dampfdüse sind, und/oder
- die Mittel zum Rückgewinnen des eingespritzten Wasserdampfs mit den Fehlgeschmacksstoffen von der zweiten Ebene der Säulenmischvorrichtung Dampfkondensationsmittel sind, die typischerweise aus mindestens einem Kühlwärmetauscher ausgewählt sind, und/oder
- die gegebenenfalls vorgesehenen Mittel zum Hydratisieren für den Inhalt der Säulenmischvorrichtung aus mindestens einem Wassersprüher ausgewählt sind.

11. System nach Anspruch 9 oder 10, wobei das Mittel zum Abtrennen des eingespritzten Wasserdampfs mit den Fehlgeschmacksstoffen zwischen der zweiten Ebene der Säulenmischvorrichtung und dem Pumpeneinlass angeordnet ist.

12. System nach einem der Ansprüche 9 bis 11, ferner umfassend mindestens eines der Folgenden:
- Mittel zum Steuern der Temperatur, des Drucks, des Wasserdurchflusses und des Dampfdurchflusses des Systems, und/oder
- Mittel zum Filtern der Luft im System.

## Revendications

1. Procédé de désodorisation d'une matière première légumineuse comprenant de l'amidon, des protéines et des composés responsables des goûts indésirables, sans dénaturation des protéines, ledit procédé comprenant les étapes suivantes :
i. mise en contact de la matière première légumineuse avec une solution aqueuse à une température allant d'environ 5 °C à environ 40 °C, conduisant à une matière légumineuse hydratée ;
ii. blanchiment de la matière première légumineuse hydratée par chauffage de celle-ci à une température comprise entre 60 °C et 121 °C, pendant une durée allant d'environ 1 à environ 30 secondes, blanchissant ainsi la matière légumineuse hydratée ;
iii. refroidissement rapide de la matière légumineuse blanchie en appliquant un vide poussé tout en agitant, ledit vide poussé présentant une pression atmosphérique absolue inférieure ou égale à 123 mbar, inférieure ou égale à 100 mbar, inférieure ou égale à 50 mbar, de préférence inférieure ou égale à 35 mbar, plus préférablement inférieure ou égale à 15 mbar, encore plus préférablement inférieure ou égale à 5 mbar, protégeant ainsi la légumineuse contre la dénaturation des protéines ;
iv. extraction à la vapeur sous vide poussé en mélangeant la matière légumineuse refroidie par injection de vapeur d'eau, ladite vapeur d'eau présentant une température allant de 30 °C à 50 °C, afin d'éliminer les composés responsables des goûts indésirables ;
v. séchage de la matière légumineuse en mettant de côté la vapeur d'eau injectée contenant les composés responsables des goûts indésirables, conduisant à une matière légumineuse séchée et désodorisée.

2. Procédé selon la revendication 1, comprenant en outre au moins une étape vi), dans laquelle la matière légumineuse séchée et désodorisée de l'étape v) est hydratée et soumise à un nouveau cycle d'extraction à la vapeur et de séchage conformément aux étapes iv) et v).

3. Procédé selon la revendication **1** ou la revendication **2**, dans lequel la matière première légumineuse est sélectionnée parmi les pois, typiquement des pois cassés jaunes.

4. Procédé selon l'une quelconque des revendications **1** à **3**, dans lequel l'étape i) est réalisée par pulvérisation de la matière première légumineuse avec une solution aqueuse.

5. Procédé selon l'une quelconque des revendications **1** à **4**, dans lequel l'étape de séchage v) est réalisée par condensation, typiquement avec un échangeur de chaleur de refroidisseur.

6. Procédé selon l'une quelconque des revendications **1** à **5**, comprenant en outre l'étape de broyage de la matière première légumineuse désodorisée et séchée en une farine de matière première légumineuse désodorisée comprenant de l'amidon et des protéines.

7. Procédé selon la revendication **6**, comprenant en outre l'étape de fractionnement de la farine de matière première légumineuse désodorisée en une fraction riche en protéines désodorisée et une fraction riche en amidon désodorisée, typiquement par broyage à classification pneumatique.

8. Procédé selon la revendication **7**, dans lequel la fraction riche en protéines désodorisée présente une taille moyenne de particule d'environ 2 µm.

9. Système pour mettre en œuvre le procédé selon l'une quelconque des revendications 1 à 8, ledit système comprenant :
- des moyens pour hydrater en mettant en contact la matière première légumineuse avec une solution aqueuse ;
- des moyens pour porter à ébullition rapide la matière première légumineuse hydratée ;
- un récipient colonnaire, typiquement un dispositif d'agitation, présentant un premier et un second plan et une surface circonférentielle chauffée,
- une chambre entourant le récipient colonnaire, avec des moyens d'étanchéité à l'air,
- au moins une pompe pour appliquer un vide poussé et une entrée de vide configurée pour appliquer dans la chambre un vide poussé à une pression atmosphérique absolue inférieure ou égale à 123 mbar, inférieure ou égale à 100 mbar, inférieure ou égale à 50 mbar, de préférence inférieure ou égale à 35 mbar, plus préférablement inférieure ou égale à 15 mbar, encore plus préférablement - inférieure ou égale à 5 mbar,
- des moyens pour injecter de la vapeur d'eau au premier plan du récipient colonnaire,
- des moyens pour évacuer la vapeur d'eau injectée avec les composés responsables des goûts indésirables depuis le second plan du dispositif de mélange colonnaire, et optionnellement
- des moyens pour hydrater le contenu du récipient colonnaire ; et/ou
- des moyens pour broyer la matière première légumineuse.

10. Système selon la revendication 9, dans lequel :
- les moyens pour hydrater en mettant en contact la matière première légumineuse avec une solution aqueuse sont sélectionnés parmi au moins un pulvérisateur, typiquement au moins un pulvérisateur configuré pour pulvériser sur un convoyeur à bande à maille ouverte, et/ou au moins un bain d'eau ; et/ou
- les moyens de chauffage pour porter à ébullition rapide la matière première légumineuse hydratée sont sélectionnés parmi un convoyeur à vis chauffée, généralement à double enveloppe de vapeur ; et/ou
- le récipient colonnaire est un dispositif de mélange, typiquement le dispositif de mélange étant un mélangeur conique ; et/ou
- les moyens de surface circonférentielle chauffée du dispositif de mélange colonnaire sont une surface circonférentielle chauffée à l'eau ; et/ou
- les moyens d'étanchéité à l'air de la chambre sont des valves pneumatiques, typiquement des vannes à globe; et/ou
- les moyens pour injecter de la vapeur d'eau au premier plan du dispositif de mélange colonnaire sont au moins une buse de vapeur,
- les moyens pour récupérer la vapeur d'eau injectée avec les composés responsables des goûts indésirables depuis le second plan du dispositif de mélange colonnaire sont des moyens de condensation de vapeur, typiquement sélectionnés parmi au moins un échangeur de chaleur de refroidisseur, et
- les moyens optionnels pour hydrater le contenu du dispositif de mélange colonnaire sont sélectionnés parmi au moins un pulvérisateur d'eau.

11. Système selon la revendication 9 ou 10, dans lequel les moyens pour évacuer la vapeur d'eau injectée avec les composés responsables des goûts indésirables sont configurés entre le second plan du dispositif de mélange colonnaire et l'entrée de la pompe.

12. Le système selon l'une quelconque des revendications 9 à 11, comprenant en outre au moins l'un des éléments suivants :
- des moyens pour contrôler la température, la pression, le débit d'eau et le débit de vapeur du système, et/ou
- des moyens pour filtrer l'air dans le système.
